# EUROPEAN PATENT APPLICATION

(11) **EP 1 215 636 A2**
(43) Date of publication of application: **19.06.2002**
(21) Application number: 01309042.8
(22) Date of filing: 24.10.2001
(51) Int. Cl.: G07F 19/00, G07F 7/10

(54) **Method of conducting transactions**

(30) Priority: 16.12.2000 GB 0030804
(71) Applicant: NCR INTERNATIONAL INC., Dayton, Ohio 45479 (US)
(72) Inventor: Black, Jonathan Simon, Dundee DD1 4JJ (GB)
(74) Representative: Williamson, Brian

(57) **Abstract**

A method is provided of authorising third parties to conduct financial transactions via an ATM (12). A user (16) firstly encrypts details of a transaction to be performed on a personal digital assistant (PDA) or similar device, and then transfers the encrypted data to a third party device (18). The third party lacks the decryption key, and is unable to access the transaction details or details of the user's account. The third party then accesses an ATM (12) and transfers the encrypted data to the ATM. The ATM operator (14) is able to decrypt the data, and performs the transaction. The transaction may include data limiting its performance to specific time periods, location, or repetitions.

## Description

The present invention relates to a method of conducting transactions and in particular to a method of conducting transactions, such as financial transactions, by means of a self service terminal (SST).

Self service terminals (SSTs), such as automated teller machines (ATMs), are commonly used to conduct a wide range of transactions, particularly financial transactions. To ensure security of these transactions, and to prevent unauthorised access to a user's account, some form of identification process is generally necessary to allow a transaction to be authorised. For example, an ATM may require a user firstly to claim an identity, with a smart card or similar identification token, and then to verify that identity by entering a personal identification number (PIN) or the like. Alternatively, biometrics identification can be used; for example, fingerprint or voice recognition, or the like.

While these measures do provide security to the user, they generally also require the user to personally attend the ATM to conduct the desired transaction. While ATMs are more convenient for many users than the alternative of visiting a bank branch during opening hours, many other users are not always able to visit an ATM in person; for example, the elderly or infirm, the housebound, the hospitalised, those who live in remote areas, or simply those with busy lifestyles with insufficient time to visit an ATM. Such persons can at present only rely on a third party to visit an ATM on their behalf, having first given the party the user's identification token (such as a smart card), and their PIN. This can lead to security lapses, as others become aware of a user's PIN, and is in fact strongly disapproved of by ATM operators. In addition, there is no way of ensuring that the third party conducts the desired transaction and not an alternative (for example, withdrawing additional cash beyond that which is authorised). Furthermore, once the third party is made aware of the user's PIN, there is no way of ensuring they do not subsequently perform additional unauthorised transactions, as they cannot be made to forget the PIN.

It is among the objects of embodiments of the present invention to obviate or alleviate these and other disadvantages of known transaction authorisation methods.

According to a first aspect of the present invention, there is provided a method of conducting a transaction via a self service terminal (SST), the method comprising the steps of:
encrypting transaction data stored in a first device, the data including security identification information;
transferring the encrypted data to a device of a third party;
allowing the third party to transfer the encrypted data to an SST; and
allowing the SST to decrypt the data, verify the security identification information, and execute the transaction.

Thus, using the present invention a user may for example encrypt data representing a transaction together with their identification token (a "digital signature"), and transfer the encrypted data to a device held by an authorised third party. As used herein, "device" is intended to refer to any device capable of storing, transferring, and receiving data; for example, a palmtop computer or the like. As the third party will be unable to decrypt the data themselves, they will not be able to determine the user's identification token, and so will be unable either to re-use the identification token or to perform unauthorised acts with the identification token. The decryption and execution steps of the transaction are carried out by the SST, either locally or in communication with a remote SST operator server.

Preferably the encryption step is performed using a portable, and preferably handheld, data processing device; for example, a handheld or palmtop computer, a personal digital assistant (PDA), a mobile telephone, or the like.

The transfer steps to the device of the third party and to the SST may be performed by one or more of wireless application protocol (WAP) technology, 'Bluetooth' wireless technology or the like, email, radio, infra-red or other electromagnetic communications means, or by a physical data transmission connection (for example, fibre optic or electrically conductive data transfer cables). Most conveniently the third party may receive and store the data on a portable or handheld data processing device; commonly such devices are equipped with local data transfer ports, such as infra-red transceivers, or in the case of mobile telephones, connections to a mobile telecommunications network.

Preferably the SST communicates with a remote data processing device to allow decryption, verification, and execution of the transaction. For example, the verification of the claimed identity may require comparison of the identity with a central database; similarly, execution of the transaction may require the SST to confirm with a central operator that sufficient funds are available in a user's account, or the like. Naturally, any or all of these steps may instead be conducted locally by the SST itself.

Conveniently the transaction data includes data signifying one or more of the value, place, time, number of allowable repetitions, or other information regarding the transaction. For example, a user may authorise a third party to withdraw some currency on their behalf only if the transaction is executed within a certain time period from the authorisation being given; or within a certain limited area. Further, a transaction may be authorised to be conducted say ten times only on a user's behalf; subsequent attempts to execute the transaction will be unsuccessful.

The third party may be an individual, for example a friend or assistant of the user; or may be an organisation or group of people. Thus, an organisation may provide a service to users of conducting transactions on their behalf, perhaps in return for some financial or other consideration.

The method may further comprise the step of transferring transaction confirmation data from the SST to the third party; and may still further comprise the step of transferring the transaction confirmation data from the third party to a user. Thus, the third party may be able to demonstrate to the user that the transaction has been completed, if desired.

The method may further comprise the intermediate step of transferring the transaction data to further third parties prior to transferring the transaction data to the SST; in this way, if the original third party is unable to conduct the transaction, they may authorise further third parties to do so on their behalf. Alternatively, or in addition, the transaction data may also include data determining which third party is permitted to transfer the data to the SST; thus, only a specific third party may execute the transaction, identified by, for example, possession of a particular device or a personal identification number (PIN) or code word, which may be specific to a single transaction, a group of transactions, or a particular third party.

According to a second aspect of the present invention, there is provided a method of conducting a transaction via a self service terminal (SST), the method comprising the following steps :
receiving on a device encrypted transaction data from a device of a third party, the data including security identification information;
transferring the encrypted data from the receiving device to an SST; and
allowing the SST to decrypt the data, verify the security identification information, and execute the transaction.

According to a further aspect of the present invention, there is provided a method of conducting a transaction via a self service terminal (SST), the method comprising the following steps :
receiving at an SST from a user encrypted transaction data, the data including security identification information;
decrypting the transaction data;
verifying the security identification information; and
executing the requested transaction.

According to a still further aspect of the present invention, there is provided a method of operating a financial service, the method comprising the steps of :
providing a user with an encryption key and an identification token for use with a user device;
providing a self service terminal (SST) with a corresponding decryption key;
accepting encrypted transaction data including the identification token from a device of a third party;
decrypting the transaction data;
verifying the decrypted identification token; and
executing the requested transaction.

According to a yet further aspect of the present invention, there is provided a method of using a financial service, the method comprising the steps of:
encrypting using a device transaction data and an identification token with an encryption key; and
presenting the encrypted data to a financial service operator via a device of a third party.

According to a still further aspect of the present invention, there is provided a method of purchasing goods or services, the method comprising the steps of:
encrypting transaction data stored in a first device, the data including security identification information;
transferring the encrypted data to a device of a third party;
allowing the third party to transfer the encrypted data to a merchant or service provider; and
allowing the merchant or service provider to decrypt the data, verify the security identification information, and execute the transaction.

This aspect of the invention may be used, for example, to authorise a third party to purchase goods or services from a shopkeeper or other merchant without providing unrestricted access to the purchasing account. 'Transfer of encrypted data to a merchant' may of course involve transferring the relevant data to a merchant's till or other device.

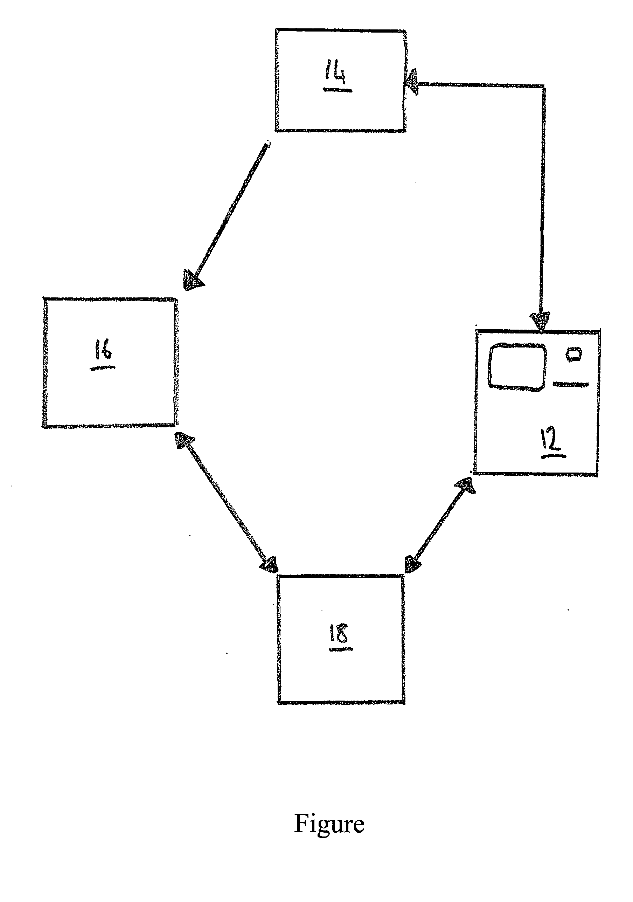

These and other aspects of the present invention will now be described by way of example only and with reference to the accompanying drawing, which shows a block diagram of a typical transaction conducted in accordance with the present invention.

The Figure shows a schematic diagram of a typical transaction in accordance with an embodiment of the present invention, and the involved individuals or components thereof. The transaction involves a self service terminal (SST) 12, which is connected to and operated by a remote operator 14, for example, a bank or other financial institution. The operator 14 has as a client a user 16, who wishes to conduct a transaction using the SST 12. However, the user 16 is unable to pay a visit to the SST for whatever reason, and so must enlist the assistance of a third party 18.

When the user 16 initially became a client of the operator 14, the operator 14 provided the user 16 with two items of data: firstly, a unique identification token, in the form of a customer number; and secondly an encryption key which may be used to securely encrypt data. Details of the identification token are also retained by the operator 14, as is the corresponding decryption key, so that the operator 14 is able to decrypt data encrypted by the user 16.

The user 16 stores these items of data on their personal digital assistant, PDA, or other handheld electronic device, such as a mobile phone or the like. When the user 16 wishes to conduct an ATM transaction, they enter details of the transaction onto their PDA - for example, a cash withdrawal of 250 euros, to be performed within the next 24 hours. The PDA then combines this transaction data with the user's identification token, and encrypts the combined data.

User 16 then places their PDA in communication with a corresponding device owned by the third party 18; for example, typical PDAs are able to transfer data locally by means of infra-red communications ports; or a mobile telecommunications network or the like may be used instead. An icon will then be displayed on the third party□s PDA denoting that a transaction is to be performed; the icon may indicate the currency value of the transaction, and the user's name; however, lacking the decryption key, the third party will be unable to access any other details of the transaction, or to access or copy the user's identification token.

The third party 18 subsequently makes their way to an SST 12 at a time convenient to them. The PDA is placed in communication with the SST 12 (for example, again making use of infra-red communications ports or the like), and the encrypted transaction data is transferred to the SST 12. The SST 12 then passes this data to the central SST operator 14 (or an alternative remote server or the like), which holds the identification token and the decryption key. The data is firstly decrypted, and the identification token confirmed as genuine, and corresponding to that particular encryption key. Confirmation of successful identity confirmation is then transferred back to the SST 12, together with the decrypted transaction data. The SST 12 is then able to execute the requested transaction, and dispenses 250 euros to the third party 12, provided the operation is performed within the specified time period.

If desired, the SST 12 can then transfer a confirmation of the transaction back to the third party 18, who is subsequently able to confirm to the user 16 that the desired transaction has been performed. This feature may be of particular use when transactions are requested which do not result in the dispensing of cash or other media items; for example, transfer of funds between accounts, or deposit of currency. The confirmation data may itself be encrypted if desired; if so, the SST 12 will request the remote operator 14 to encrypt the confirmation using the user's encryption key. Only the authorised user 16 will therefore be able to read the confirmation.

It will be seen from the foregoing that the present invention therefore enables users to authorise third parties to conduct transactions on their behalf at an SST without the requirement to reveal details of their security codes, and in a controllable and limited manner.

## Claims

1. A method of conducting a transaction via a self service terminal (SST), the method comprising the steps of:
encrypting transaction data stored in a first device, the data including security identification information;
transferring the encrypted data to a device of a third party;
allowing the third party to transfer the encrypted data to an SST; and
allowing the SST to decrypt the data, verify the security identification information, and execute the transaction.

2. The method of claim 1, further comprising the step of transferring transaction confirmation data from the SST to the third party.

3. The method of claim 1 or claim 2, further comprising the step of including data determining which third party is permitted to transfer the data to the SST.

4. A method of conducting a transaction via a self service terminal (SST), the method comprising the following steps :
receiving on a device encrypted transaction data from a device of a third party, the data including security identification information;
transferring the encrypted data from the receiving device to an SST; and
allowing the SST to decrypt the data, verify the security identification information, and execute the transaction.

5. A method of operating a financial service, the method comprising the steps of :
providing a user with an encryption key and an identification token for use with a user device;
providing a self service terminal (SST) with a corresponding decryption key;
accepting encrypted transaction data including the identification token from a device of a third party;
decrypting the transaction data;
verifying the decrypted identification token; and
executing the requested transaction.

6. A method of using a financial service, the method comprising the steps of:
encrypting using a device transaction data and an identification token with an encryption key; and
presenting the encrypted data to a financial service operator via a device of a third party.

7. A method of purchasing goods or services, the method comprising the steps of:
encrypting transaction data stored in a first device, the data including security identification information;
transferring the encrypted data to a device of a third party;
allowing the third party to transfer the encrypted data to a merchant or service provider; and
allowing the merchant or service provider to decrypt the data, verify the security identification information, and execute the transaction.
